# EUROPEAN PATENT SPECIFICATION

(11) **EP 0 373 601 B1**
(45) Date of publication and mention of the grant of the patent: **15.03.1995**
(21) Application number: 89122952.8
(22) Date of filing: 12.12.1989
(51) Int. Cl.: H02J 3/18

(54) **Reactive power compensation apparatus with improved gate circuit**
Blindleistungskompensator mit verbesserter Gatterschaltung
Compensateur de puissance réactive avec circuit de gachette modifié

(30) Priority: 12.12.1988 JP 313234/88
(43) Date of publication of application: 20.06.1990
(73) Proprietor: KABUSHIKI KAISHA TOSHIBA, Kawasaki-shi, Kanagawa-ken 210 (JP)
(72) Inventor: Ino, Hidetoshi c/o Intellectual Property Division, Minato-ku Tokyo 105 (JP)
(74) Representative: Henkel, Feiler, Hänzel & Partner

(56) References cited:
- EP-A- 0 113 872
- EP-A- 0 155 597
- EP-A- 0 259 805
- EP-A- 0 298 515
- WO-A-84/02404

## Description

The present invention relates to a stationary reactive power compensation apparatus for a thyristor phase-control reactor formed of a thyristor valve and a reactor and, more particularly, to a reactive power compensation apparatus with an improved gate circuit.

For stabilization of an electric power system, reactive power compensation apparatus (hereinafter referred to as SVC) is utilized. The reactive power compensation apparatus includes a thyristor phase-control reactor (hereinafter referred to as TCR) adapted to adjust lagging reactive power.

In a conventional TCR, the occurrence of partial commutation failure due to a very small reverse voltage applied across a valve after control angle α = 0° firing and the resultant breakdown of thyristors in the valve cause the reactive power compensation apparatus to be inoperable as SVC.

Prior art document EP-A-298 515 according to Art. 54(3) EPC discloses a gate signal generator for a thyristor valve. This gate signal generator comprises U- and X-phase set circuits for discriminating, after the conduction period of every cycle, whether OFF time intervals of U- and X-phase thyristors are greater or smaller than a predetermined value, a reset circuit for detecting that both the U-and X-phase circuits do not provide outputs, and a flip-flop set in response to an output from the U- or X-phase set circuit and reset in response to an output from the reset circuit. AND gates calculate AND products of an output from the flip-flop and U- and X-phase forward voltage signals and output the signals at a start of the forward voltage application after setting the flip-flop, and OR gates calculate OR sums of outputs, from the AND gates and outputs from normal gate circuits. Gate signals are applied to the thyristors in response to the outputs from the OR gates.

It is an object of the present invention to provide a reactive power compensation apparatus which permits the operation of SVC even at the time of generation of a very small reverse voltage (i.e., at the time of α = 0° firing), which operation cannot be controlled by a conventional gate circuit.

To solve this object the present invention provides a reactive power compensation apparatus as specified in claim 1.

The reactive power compensation apparatus comprises first means for detecting that a thyristor which is in a conducting state is supplied with a reverse voltage for a predetermined time (T4) after the termination of conduction thereof; and second means for detecting the conducting state of the thyristor which state continues for a desired time (T3) more than a turn off time of a nonconducting thyristor after the application of a firing pulse thereto, the first or second means serving to reset a "on" period signal of the thyristor which is conducting.

In apparatus comprising the first and second means, if an error or fault firing pulse is produced at α = 0°, the "on" period (conducting phase angle) of a thyristor which is fired erroneously extends approximately up to 360°. In this case, the "on period of a thyristor which is anti-parallel connected with the erroneously fired thyristor is very short but becomes long gradually with time. With the extension of the "on" period, when it is detected that the "on" period of the thyristor has continued for a desired period of time (T3), the "on" period signal for the erroneously fired thyristor is reset. Afterward, by detecting that a reverse voltage has been applied to each thyristor for a predetermined time less than its turn off time from the termination of its conduction, the "on" period signal of each thyristor is reset.

This invention can be more fully understood from the following detailed description when taken in conjunction with the accompanying drawings, in which:
Fig. 1 is a block diagram of a gate circuit according to an embodiment of the present invention which is applied to a reactive power compensation using a thyristor phase-control reactor;
Fig. 2 is a timing diagram for explaining the operation of the gate circuit of Fig. 1; and
Fig. 3 is a block diagram illustrating an arrangement in which the gate circuit of Fig. 1 is replaced with a computer-controlled circuit.

Preferred embodiments of the invention will be described with reference to the accompanying drawings. In the description, the same or functionally equivalent elements are denoted by the same or similar reference numerals, to thereby simplify the description.

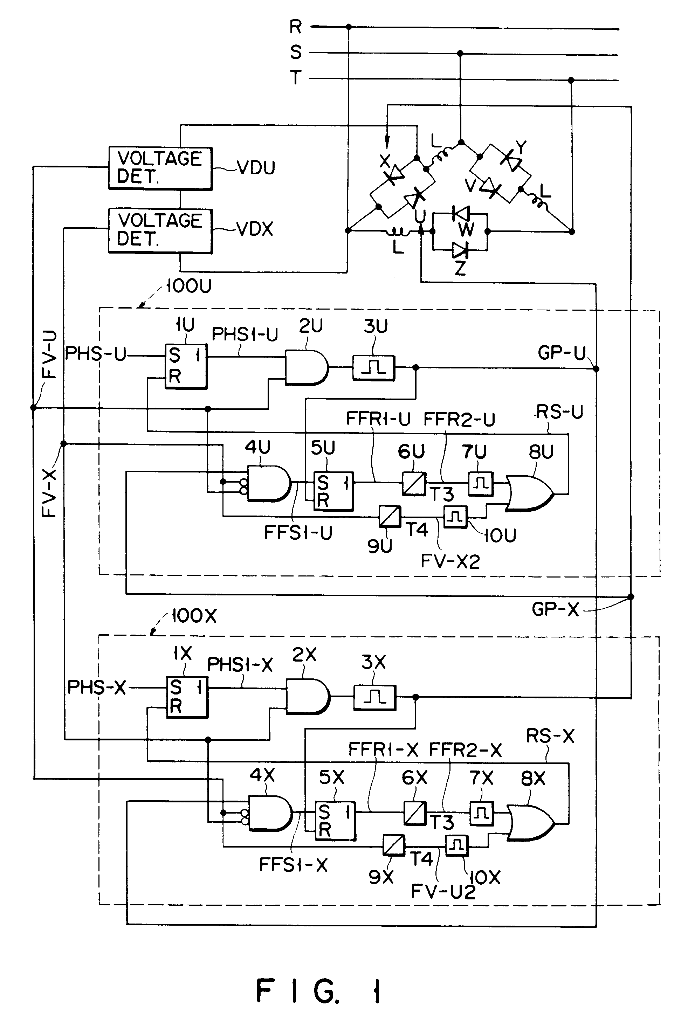

In Fig. 1, with three-phase alternating-current system RST is connected a delta-connected TCR comprising a U-phase thyristor valve, a V-phase thyristor valve, a W-phase thyristor valve, an X-phase thyristor valve, a Y-phase thyristor valve, a Z-phase thyristor valve and three reactors L.

Hereinafter, the U phase and X phase of the three-phase TCR will be described in detail. (Although descriptions are omitted, the V phase, Y phase; W phase, Z phase are the same as the U phase and X phase in arrangement.)

U-phase voltage detector VDU and X-phase voltage detector VDX are connected to U-phase and X-phase thyristor valves which are parallel connected in the opposite directions (i.e., anti-parallel connection). U-phase voltage detector VDU produces a forward voltage signal FV-U at a logic level 1 when a forward voltage is applied to the U-phase thyristor valve, while X-phase voltage detector VDX produces a forward voltage FV-X at a logic level 1 when a forward voltage is applied to the X-phase thyristor valve. Signals FV-U and FV-X are respectively sent to U-phase gate circuit 100U and X-phase gate circuit 100X through optical fibers, for example.

When a forward voltage is applied across the U-phase valve and a reverse voltage is applied across the X-phase valve, FV-U = 1 and FV-X = 0. When a reverse voltage is applied across the U-phase valve and a forward voltage is applied across the X-phase valve, on the other hand, FV-U = 0 and FV-X = 1. When no forward voltage is applied across each of the U-phase and X-phase valves, FV-U = FV-X = 0.

U-phase gate circuit 100U includes a flip-flop 1U which is set by a U-phase phase control signal PHS-U. Output PHS1-U is coupled to AND gate 2U to which forward voltage signal FV-U is also applied. When the logical product of PHS1-U and FV-U goes to a logic 1, a pulse generator 3u, such as a multivibrator, is triggered to produce a gate pulse GP-U to fire the U-phase valve.

X-phase gate circuit 100X includes a flip-flop 1X which is set by an X-phase phase control signal PHS-X. Output PHS1-U is coupled to AND gate 2X to which forward voltage signal FV-X is also applied. When the logical product of HS1-X and FV-X goes to a logic 1, a pulse generator 3X is triggered to produce a gate pulse GP-X to fire the X-phase valve.

U-phase gate circuit 100U further includes an AND gate 4U which produces a signal FFS1-U at a logic 1 when its inputs are such that GP-X = 1 and FV-X = FV-U = 0. This signal FFS1-U sets a flip-flop 5U which is reset by the U-phase gate pulse GP-U.

Output FFR1-U of flip-flop 5U is input to a timer 6U which provides a delay time of T3 (which is as much as a zero-volt turn off time of a thyristor and usually 2 to 3 ms). A signal FFR2-U (= 1) is output from timer 6U after the lapse of time T3 from application of FFR1-U thereto.

On the other hand, the X-phase forward voltage signal FV-X is applied to a timer 9U with a delay time of T4 (which is less than T3 and usually equal to a thyristor turn-off time of 0.7 to 1 ms). A signal FV-X2 (= 1) is output from timer 6U after the lapse of time T3 from when FFR1-U is applied thereto.

The output of pulse generator 7U triggered by signal FFR2-U and the output of pulse generator 10U triggered by signal FV-X are input to an OR gate 8U which applies a signal RS-U, which is a logical sum of the output (= 1) of pulse generator 7U and the output (= 1) of pulse generator 10U, to flip-flop 1U. Flip-flop 1U is reset by signal RS-U.

X-phase gate circuit 100X likewise includes an AND gate 4X which produces a signal FFS1-X at a logic 1 when its inputs are GP-U = 1 and FV-U = FV-X = 0. This signal FFS1-X = 1 sets a flip-flop 5X which is reset by the X-phase gate pulse GP-X.

Output FFR1-X of flip-flop 5X is input to timer 6X which provides a time delay of T3. A signal FFR2-X (= 1) is output from timer 6X after the lapse of T3 from when FFR1-X is applied thereto.

On the other hand, the U-phase forward voltage signal FV-U is applied to timer 9X of a time delay of T4 with the result that a signal FV-U2 (= 1) is output from timer 9X after the lapse of T4 from when FV-U is applied thereto.

The output of pulse generator 7X triggered by the signal FFR2-X and the output of pulse generator 10X triggered by the signal FV-U2 are applied to OR gate 8X. OR gate 8X feeds a signal RS-X, which is the logical sum of the output (= 1) of pulse generator 7X and the output (= 1) of pulse generator 10X, to flip-flop 1X. Flip-flop 1X is reset by signal RS-X.

In this way, U-phase gate circuit 100U and X-phase gate circuit 100X are constructed.

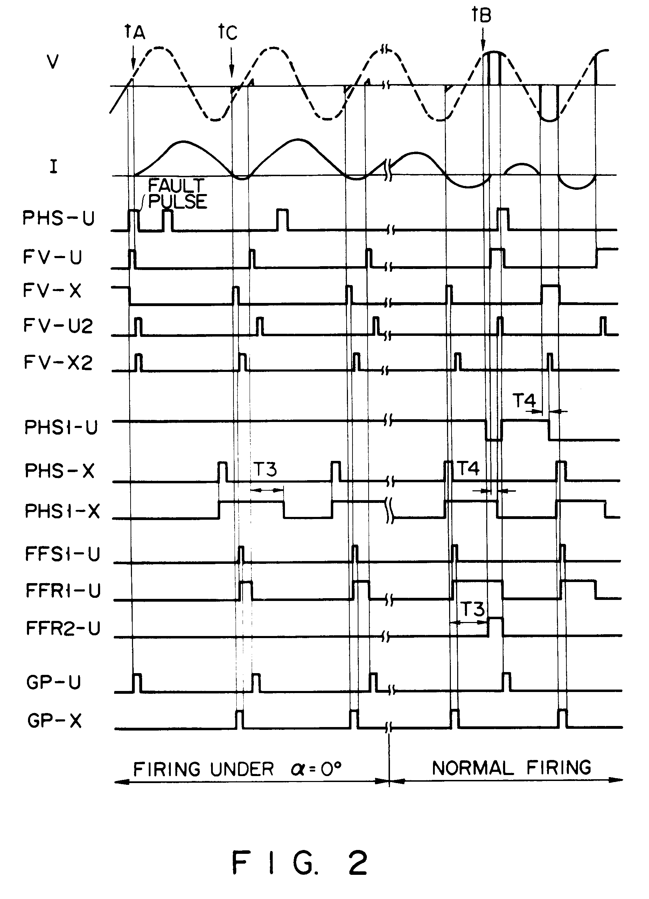

The timing of generation of various signals and their pulse widths in those gate circuits are illustrated in Fig. 2 by way of example. In Fig. 2, V represents a voltage waveform across each of the U-phase and X-phase valve, while I represents a current waveform flowing through each of the U-phase and X-phase valves. The left-hand half of Fig. 2 represents various waveforms at the time of firing under α = 0°, while the right-hand half represents various waveforms when a margin angle is sufficient.

When voltages of the system R, S, T are normal and no error or fault pulses are generated, the margin angle is sufficiently great. Hence, plural thyristors in a thyristor valve of each phase will not fail in partial commutation because of shortage of the margin angle. In this case, since a reverse voltage across the U-phase valve is enough (in other words, a forward voltage is applied across the X-phase valve), FV-X = 1 so that AND gate 4U is closed.

Flip-flop 5U will not be set so that timer 6U does not start and timer 9U starts instead because of FV-X = 1. Hence, flip-flop 1U is reset by timer 9U after a time delay of T4 so that the conduction of the U-phase valve terminates. Subsequently the conduction of the X-phase valve is started.

With the embodiment of Fig. 1, there are two ways of resetting flip-flop 1U which provides signal PHS1-U representing the on period of the U-phase valve:
(a) resetting which is performed after the lapse of T4 from when FV-X goes from a logic 0 to a logic 1 using timer 9U that is brought into operation when a reverse voltage across the U-phase valve is enough (FV-X = 1); and
(b) resetting which is performed by timer 6U after the lapse of T3 from when gate pulse GP-X is produced to conduct the X-phase valve and a forward voltage is not applied to each of the U-phase valve and the X-phase valve (FV-U = 0, FV-X = 0, GP-X = 1).

Flip-flop 1U is reset in the above way of either (a) or (b).

In Fig. 2 there is illustrated a timing diagram of various signals when α = 0° firing occurs because of error pulses.

The on period of the U-phase valve becomes long because of α = 0° firing due to pulse GP-U at time tA and a small reverse voltage is applied to the U-phase valve at time tC. With the X-phase valve, when flip-flop 1U is set by phase control signal PHS-X to produce the on period signal PHS1-X at a logic 1 and the on period signal PHS1-X is then ANDed with the forward voltage signal FV-X at a logic 1, a gate pulse GP-X is produced to fire the X-phase valve. At this point, enough reverse voltage is not applied across the U-phase valve and the on period of the X-phase valve is not more than T3 so that flip-flop 1U is not reset. For this reason, the output signal PHS1-U of flip-flop 1U indicating the U-phase on period remains at a logic 1 so that the U-phase valve continues to be fired every time a forward voltage is applied to the U phase (FV-U = 1).

With the X-phase valve, on the other hand, flip-flop 1X producing the on period signal PHS1-X is reset after the lapse of T3 from when the U-phase valve is conducted (GP-U = 1). A valve current due to the α = 0° firing continues several cycles during which time its transient direct current component decays and then flip-flop 1U, which produces the on period signal PHS1-U of the U-phase valve, is reset when the on period of the X-phase valve is sustained for T3 (at time tB in Fig. 2).

In this way, the U-phase valve and the X-phase valve continue to be conducted together (the region in which PHS1-U = 1 in the firing under α = 0° shown in Fig. 2) with small reverse voltages (FV-U = 0, FV-X = 0) applied thereto. Hence, no partial commutation failure occurs and the thyristor valves continue to be operated normally.

Even if a reverse voltage is not applied across a thyristor after its conduction, no partial commutation failure occurs when 2 to 3 ms elapses after termination of the conduction (i.e., the thyristor is subjected to a zero-volt turn-off). Thus, if time T3 is set to 2 to 3 ms or more, then flip-flop 1U and 1X which determine the on periods can be reset. In general, timer T3 is set to 2 to 3 ms and time T4 is set to about 1 ms or less (1 to 0.7 ms).

Gate circuits 100U and 100X of Fig. 1 handle many signals which are 1 ms or less in pulse width and thus need rather high speed operation. The high speed operation is easy to realize with such a circuit composed of discrete parts as shown in Fig. 1, but it is not so easy to realize with software control using an 8-bit microcomputer that is slow in operation.

In recent years, however, fairly high-speed 16-bit to 32-bit microcomputers of CISC (Complexed Instruction Set Computer) type or RISC (Reduced Instruction Set Computer) type have been available easily and thus it is now possible to form the gate circuit portion of Fig. 1 with computer circuitry along with conventional circuit portions which handle phase control signals PHS-U and PHS-X and other signals.

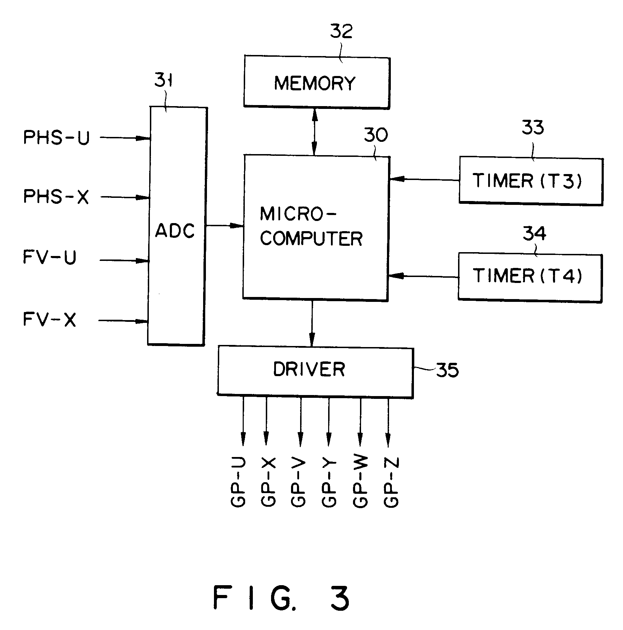

Fig. 3 illustrates the main portion of an arrangement in which the gate circuit portion of Fig. 1 is replaced with such high-speed computer circuitry (circuits portions that handle phase control signals PHS-U and PHS-X and other signals are omitted).

Phase control signals PHS-U and PHS-X and forward voltage signals FV-U and FV-X are input to a microcomputer 30 via A/D converter 31. Connected with microcomputer 30 are a memory 32 storing data and programs, a timer counter 33 which corresponds to timers 6U and 6X of Fig. 1 and thus provides a time delay of T3, a timer counter 34 which corresponds to timers 9U and 9X of Fig. 1 and thus provides a time delay of T4 and a driver 35 which feeds processing results as gate pulses GP-U and GP-X and so on to corresponding thyristor valves through optical fibers (not shown) or the like.

Such an arrangement as described above will enable the present invention to be realized with a computer system.

The embodiment of Fig. 1 is applied to a three-phase power system, but the present invention may be applied to a single-phase power system.

The voltage detectors VDU and VDX of Fig. 1 may be arranged as shown in Fig. 10 of US Patent Application serial No. 216,538.

As described above, according to the present invention, in the case of firing under α = 0° where a reverse voltage applied across a valve after its conduction is very small, a flip-flop (1), which produces a gate pulse, is reset during a period of time of T3 more than the turn-off time of thyristors in the valve so that all the thyristors in the valve can be turned off at the time of commutation and breakdown of thyristors due to partial commutation failure can be prevented.

## Claims

1. A reactive power compensation apparatus in which a reactor (L) is connected in series with thyristors (U, X) which are parallel connected in opposite directions, and a forward voltage signal applied to said thyristors (U, X) and thyristors on period signals (PHS1-U, PHS1-X) set by phase control signals (PHS-U, PHS-X) are ANDed to produce firing pulses (GP-U, GP-X), to thereby control a current flowing through said reactor, comprising:
first means (9) for detecting that a reverse voltage has been applied to conducting thyristors (U, X) after a first predetermined period of time (T4) after the termination of conduction thereof,
second means (4 to 6) for detecting that, after the application of a firing pulse (GP-X) to nonconducting thyristors (X, U), the conduction state thereof has continued for a second predetermined time (T3) more than its zero voltage turn-off time, and
means (7, 8, 10) for resetting the on period signal (PSH1-U, PHS1-X) of the conducting thyristors (U, X) with the output of either said first means (9) or said second means (4 to 6), wherein:
the first predetermined time (T4) is less than said second predetermined time (T3).

2. Apparatus according to claim 1,
wherein a thyristor phase control reactor (TCR) includes a series circuit of a pair of said thyristors (U, X) which are connected to an alternating current source (R, S, T),
characterized by further comprising:
voltage detecting means (VDU, VDX) for detecting a forward voltage across said thyristor pair (U, X) to produce a forward voltage signal (FV-U) when a forward voltage is applied across one (U) of said thyristors (U, X) and a reverse voltage signal (FV-X) when a reverse voltage is applied across said one thyristor (U), wherein the reverse voltage signal (FV-X) represents the reverse voltage signal of one thyristor (U) and represents the forward voltage signal of the other thyristor (X), and the forward voltage signal (FV-U) represents the reverse voltage signal of the other thyristor (X) and represents the forward voltage signal of the one thyristor (U);
one gate pulse generating means (1U to 3U), set by the phase control signal (PHS-U) and responsive to the forward voltage signal (FV-U), for generating one gate pulse (GP-U) for firing the one thyristor (U) of said thyristor pair;
first resetting means (4U to 8U) for resetting said one gate pulse generating means after the lapse of the second predetermined time (T3) more than a zero voltage turn-off time of said one thyristor (U) from when other gate pulse (GP-X) for firing the other thyristor (X) of said thyristor pair (U, X) is produced under the condition in which neither the forward voltage signal nor the reverse voltage signal is produced, to thereby prevent the one gate pulse from being produced until the phase control signal (PHS-U) is next produced; and
second resetting means (8U to 10U) for resetting said one gate pulse generating means when the reverse voltage signal (FV-X) is produced after the lapse of the first predetermined time (T4) from the termination of conduction of said one thyristor (U) of said thyristor pair, to thereby prevent the one gate pulse from being produced until the phase control signal (PHS-U) is next produced.

3. Apparatus according to claim 2, characterized in that said voltage detecting means includes means (VDU, VDX) for detecting a forward voltage across said thyristor pair to produce one forward voltage signal (FV-U) when a forward voltage is applied across said one thyristor (U) of said thyristor pair or one reverse voltage signal (FV-X) when a reverse voltage is applied across said one thyristor (U), and producing other forward voltage signal (FV-X) when a forward voltage is applied across said other thyristor (X) of said thyristor pair or other reverse voltage signal (FV-U) when a reverse voltage is applied across said other thyristor (X).

4. Apparatus according to claim 3, characterized by further comprising:
other gate pulse generating means (1X to 3X) set by a predetermined other conduction control signal (PHS-X) and responsive to the other forward voltage signal (FV-X) for generating other gate pulse (GP-X) for firing the other thyristor (X) of said thyristor pair;
third resetting means (4X to 8X) for resetting said other gate pulse generating means (1X to 3X) after the lapse of the second predetermined time (T3) more than the zero voltage turn-off time of said other thyristor (X) from when the one gate pulse (GP-U) for firing the one thyristor (U) of said thyristor pair (U, X) is produced under the condition in which neither the other forward voltage signal nor the other reverse voltage signal is produced, to thereby preventing the other gate pulse from being produced until the other conducting control signal (PHS-X) is next produced; and
fourth resetting means (8X to 10X) for resetting said other gate pulse generating means when the other reverse voltage signal (FV-U) is produced after the lapse of the first predetermined time (T4) from the termination of conduction of said other thyristor of said thyristor pair, to thereby prevent the other gate pulse from being produced until the other conduction control signal (PHS-X) is next produced).

## Patentansprüche

1. Blindleistungskompensationsgerät, in welchem eine Drossel (L) in Reihe mit Thyristoren (U, X) verbunden ist, die parallel in entgegengesetzten Richtungen angeschlossen sind, und ein Vorwärts-Spannungssignal, das an den Thyristoren (U, X) liegt, und Thyristor-Ein-Periode-Signale (PHS1-U, PHS1-X), die durch Phasensteuersignale (PHS-U, PHS-X) gesetzt sind, UND-verknüpft sind, um Zündimpulse (GP-U, GP-X) zu liefern, um so einen durch die Drossel fließenden Strom zu steuern, mit:
einer ersten Einrichtung (9) zum Erfassen, daß eine Rückwärtsspannung an leitende Thyristoren (U, X) nach einer ersten vorbestimmten Zeitdauer (T4) nach der Beendigung von deren Leitung gelegt ist,
einer zweiten Einrichtung (4 bis 6) zum Erfassen, daß nach der Anlegung eines Zündimpulses (GP-X) an nicht leitende Thyristoren (X, U) deren Leitungszustand für eine zweite vorbestimmte Zeitdauer (T3) mehr als deren Nullspannungs-Ausschaltzeit fortgesetzt ist, und
einer Einrichtung (7, 8, 10) zum Rücksetzen des Ein-Periode-Signales (PSH1-U, PHS1-X) der leitenden Thyristoren (U, X) mit dem Ausgangssignal entweder der ersten Einrichtung (9) oder der zweiten Einrichtung (4 bis 6), wobei:
die erste vorbestimmte Zeitdauer (T4) kürzer als die zweite vorbestimmte Zeitdauer (T3) ist.

2. Gerät nach Anspruch 1,
bei dem eine Thyristorphasensteuerdrossel (TCR) eine Reihenschaltung eines Paares der Thyristoren (U, X) aufweist, die an eine Wechselstromquelle (RST) angeschlossen sind,
gekennzeichnet durch:
eine Spannungsdetektoreinrichtung (VDU, VDX) zum Erfassen einer Vorwärtsspannung über dem Thyristorpaar (U, X), um ein Vorwärtsspannungssignal (FV-U), wenn eine Vorwärtsspannung über einem (U) der Thyristoren (U, X) liegt, und ein Rückwärtsspannungssignal (FV-X), wenn eine Rückwärtsspannung über dem einen Thyristor (U) liegt, zu erzeugen, wobei das Rückwärtsspannungssignal (FV-X) das Rückwärtsspannungssignal des einen Thyristors (U) darstellt und das Vorwärtsspannungssignal des anderen Thyristors (X) darstellt und das Vorwärtsspannungssignal (FV-U) das Rückwärtsspannungssignal des anderen Thyristors (X) darstellt und das Vorwärtsspannungssignal des einen Thyristors (U) darstellt,
eine Ein-Gatterimpuls-Generatoreinrichtung (1U bis 3U), die durch das Phasensteuersignal (PHS-U) gesetzt ist und auf das Vorwärtsspannungssignal (FV-U) anspricht, um einen Ein-Gatterimpuls (GP-U) zum Zünden des einen Thyristors (U) des Thyristorpaares zu erzeugen,
eine erste Rücksetzeinrichtung (4U bis 8U) zum Rücksetzen der Ein-Gatterimpuls-Generatoreinrichtung nach dem Ablauf der zweiten vorbestimmten Zeit (T3) mehr als eine Nullspannungs-Ausschaltzeit des einen Thyristors (U), ab wenn ein anderer Gatterimpuls (GP-X) zum Zünden des anderen Thyristors (X) des Thyristorpaares (U, X) erzeugt ist unter der Bedingung, in welcher weder das Vorwärtsspannungssignal noch das Rückwärtsspannungssignal erzeugt ist, um dadurch zu verhindern, daß der eine Gatterimpuls erzeugt wird, bis das Phasensteuersignal (PHS-U) als nächstes erzeugt ist; und
eine zweite Rücksetzeinrichtung (8U bis 10U) zum Rücksetzen der Ein-Gatterimpuls-Generatoreinrichtung, wenn das Rückwärtsspannungssignal (FV-X) erzeugt wird nach dem Ablauf der ersten vorbestimmten Zeit (T4) von der Beendigung der Leitung des einen Thyristors (U) des Thyristorpaares, um dadurch zu verhindern, daß der eine Gatterimpuls erzeugt wird, bis das Phasensteuersignal (PHS-U) als nächstes erzeugt ist.

3. Gerät nach Anspruch 2, dadurch gekennzeichnet, daß die Spannungsdetektoreinrichtung eine Einrichtung (VDU, VDX) zum Erfassen einer Vorwärtsspannung über dem Thyristorpaar aufweist, um ein Vorwärtsspannungssignal (FV-U), wenn eine Vorwärtsspannung über dem einen Thyristor (U) des Thyristorpaares liegt, oder ein Rückwärtsspannungssignal (FV-X), wenn eine Rückwärtsspannung uber dem einen Thyristor (U) liegt, zu erzeugen, und um ein anderes Vorwärtsspannungssignal (FV-X), wenn eine Vorwärtsspannung über dem anderen Thyristor (X) des Thyristorpaares, oder ein anderes Rückwärtsspannungssignal (FV-U), wenn ein Rückwärtsspannungssignal über dem anderen Thyristor (X) liegt, zu erzeugen.

4. Gerät nach Anspruch 3, gekennzeichnet durch:
eine andere Gatterimpuls-Generatoreinrichtung (1X bis 3X), die durch ein vorbestimmtes anderes Leitungssteuersignal (PHS-X) gesetzt ist und auf das andere Vorwärtsspannungssignal (FV-X) anspricht, um einen anderen Gatterimpuls (GP-X) zum Zünden des anderen Thyristors (X) des Thyristorpaares zu erzeugen,
eine dritte Rücksetzeinrichtung (4X bis 8X) zum Rücksetzen der anderen Gatterimpuls-Generatoreinrichtung (1X bis 3X) nach dem Ablauf der zweiten vorbestimmten Zeit (T3) mehr als die Nullspannungs-Ausschaltzeit des anderen Thyristors (X), ab wenn der eine Gatterimpuls (GP-U) zum Zünden des einen Thyristors (U) des Thyristorpaares (U, X) erzeugt ist unter der Bedingung, in welcher weder das andere Vorwärtsspannungssignal noch das andere Rückwärtsspannungssignal erzeugt ist, um dadurch zu verhindern, daß der andere Gatterimpuls erzeugt wird, bis das andere Leitsteuersignal (PHS-X) als nächstes erzeugt ist, und
eine vierte Rücksetzeinrichtung (8X bis 10X) zum Rücksetzen der anderen Gatterimpuls-Generatoreinrichtung, wenn das andere Rückwärtsspannungssignal (FV-U) erzeugt ist nach dem Ablauf der ersten vorbestimmten Zeit (T4) von der Beendigung der Leitung des anderen Thyristors des Thyristorpaares, um dadurch zu verhindern, daß der andere Gatterimpuls erzeugt wird, bis das andere Leitungssteuersignal (PHS-X) als nächstes erzeugt ist.

## Revendications

1. Un appareil de compensation de puissance réactive, dans lequel un réacteur (L) est monté en série avec des thyristors (U,X) qui sont montés en parallèle et en sens opposé, et un signal de tension directe appliqué auxdits thyristors (U, X) et des signaux (PHS1-U, PHS1-X) de période de conduction des thyristors, établis par des signaux (PHS-U, PHS-X) de commande de phase, sont traités en logique ET pour produire des impulsions de déclenchement (GP-U, GP-X), de manière à commander le passage d'un courant à travers ledit réacteur, comportant :
des premiers moyens (9) pour détecter qu'une tension inverse a été appliquée aux thyristors en conduction (U, X) après une première durée prédéterminée (T4) suivant la fin de leur conduction,
des seconds moyens (4 à 6) pour détecter que, après l'application d'une impulsion de déclenchement (GP-X) aux thyristors non conducteurs (X, U), leur état de conduction s'est poursuivi pendant une seconde durée prédéterminée (T3) supérieure à leur durée d'extinction à tension zéro, et
des moyens (7, 8, 10) pour remettre à zéro le signal de période de conduction (PHS1-U, PHS1-X) des thyristors en conduction (U,X) avec la sortie desdits premiers moyens (9) ou desdits seconds moyens (4 à 6), dans lequel :
la première durée prédéterminée (T4) est inférieure à ladite seconde durée prédéterminée (T3).

2. Appareil sur la revendication 1,
dans lequel un réacteur (TCR) de commande de phase de thyristors comporte un circuit série d'une paire desdits thyristors (U, X) qui sont reliés à une source de courant alternatif (R, S, T),
caractérisé en ce qu'il comporte au surplus :
des moyens (VDU, VDX) de détection de tension pour détecter une tension directe aux bornes de ladite paire de thyristors (U, X) pour produire un signal de tension directe (FV-U) lorsqu'une tension directe est appliquée aux bornes de l'un (U) desdits thyristors (U, X) et un signal de tension inverse (FV-X) lorsqu'une tension inverse est appliquée aux bornes dudit thyristor (U), le signal de tension inverse (FV-X) représentant le signal de tension inverse d'un thyristor (U), et représentant le signal de tension directe de l'autre thyristor (X), et le signal de tension directe (FV-U) représentant le signal de tension inverse de l'autre thyristor (X) et représentant le signal de tension directe du thyristor (U) ;
des moyens (1U à 3U) de création d'une impulsion de gâchette, établis par le signal de commande de phase (PHS-U) et sensibles au signal de tension directe (FV-U), pour engendrer une impulsion de gâchette (GP-U) de manière à déclencher l'un (U) des thyristors de ladite paire de thyristors ;
des premiers moyens (4U à 8U) de remise à zéro pour remettre à zéro lesdits moyens de création d'une impulsion de gâchette après l'écoulement de la seconde durée prédéterminée (T3) supérieure à une durée d'extinction à tension zéro dudit thyristor (U) à partir de l'instant auquel l'autre impulsion de gâchette (GP-X) de déclenchement de l'autre thyristor (X) de ladite paire de thyristors (U, X) est produite dans la condition suivant laquelle ni le signal de tension directe, ni le signal de tension inverse, ne sont produits, pour empêcher ainsi l'impulsion de gâchette d'être produite jusqu'à ce que le prochain signal de commande de phase (PHS-U) soit produit ; et
des seconds moyens (8U à 10U) de remise à zéro pour remettre à zéro lesdits moyens de création d'une impulsion de gâchette lorsque le signal de tension inverse (FV-X) est produit après l'écoulement de la première durée prédéterminée (T4) à partir de la fin de la conduction dudit thyristor (U) de ladite paire de thyristors, pour empêcher ainsi l'impulsion de gâchette d'être produite jusqu'à ce que le prochain signal de commande de phase (PHS-U) soit produit.

3. Appareil sur la revendication 2, caractérisé en ce que lesdits moyens de détection de tension comportent des moyens (VDU, VDX) pour détecter une tension directe aux bornes de ladite paire de thyristors de manière à produire un signal de tension directe (FV-U) lorsqu'une tension directe est appliquée aux bornes d'un thyristor (U) de ladite paire de thyristors ou un signal de tension inverse (FV-X) lorsqu'une tension inverse est appliquée aux bornes du thyristor (U), et pour produire un autre signal de tension directe (FV-X) lorsqu'une tension directe est appliquée aux bornes dudit autre thyristor (X) de ladite paire de thyristors ou un signal de tension inverse (FV-U) lorsqu'une tension inverse est appliquée aux bornes dudit autre thyristor (X).

4. Appareil selon la revendication 3, caractérisé en ce qu'il comporte au surplus :
des moyens (1X à 3X) de création d'une autre impulsion de gâchette, établis par un autre signal prédéterminé de commande de conduction (PHS-X) et sensiblesà l'autre signal de tension directe (FV-X), pour engendrer une autre impulsion de gâchette (GP-X) de manière à déclencher l'autre thyristor (X) de ladite paire de thyristors ;
des troisièmes moyens (4X à 8X) de remise à zéro pour remettre à zéro lesdits moyens (1X à 3X) de création d'une autre impulsion de gâchette après l'écoulement de la seconde durée prédéterminée (T3) supérieure à la durée d'extinction à tension zéro dudit autre thyristor (X) à partir de l'instant auquel la première impulsion de gâchette (GP-U) de déclenchement du thyristor (U) de ladite paire de thyristors (U, X) est produite sous la condition dans laquelle ni l'autre signal de tension directe, ni l'autre signal de tension inverse, ne sont produits, pour empêcher ainsi que l'autre impulsion de gâchette soit produite avant que le prochain autre signal de commande de conduction (PHS-X) soit produit ; et
des quatrièmes moyens (8X à 10X) de remise à zéro pour remettre à zéro lesdits moyens de création d'une autre impulsion de gâchette lorsque l'autre signal de tension inverse (FV-U) est produit après l'écoulement de la première durée prédéterminée (T4) à partir de la fin de conduction dudit autre thyristor de ladite paire de thyristors, pour empêcher ainsi que l'autre impulsion de gâchette soit produite avant que le prochain autre signal de commande de conduction (PHS-X) ne soit produit.
